# EUROPEAN PATENT SPECIFICATION

(11) **EP 2 920 019 B1**
(45) Date of publication and mention of the grant of the patent: **12.08.2020**
(21) Application number: 13799423.2
(22) Date of filing: 07.11.2013
(51) Int. Cl.: B60K 37/02

(54) **ILLUMINATED VEHICLE INTERIOR COMPONENT**
BELEUCHTETE FAHRZEUGINNENAUSSTATTUNGSKOMPONENTE
COMPOSANT INTÉRIEUR DE VÉHICULE ÉCLAIRÉ

(30) Priority: 13.11.2012 US 201261725815 P
(43) Date of publication of application: 23.09.2015
(73) Proprietor: Shanghai Yanfeng Jinqiao Automotive Trim Systems Co., Ltd., Shanghai 201206 (CN)
(72) Inventor: FRENS, Jonathan M., Hudsonville, Michigan 49426 (US); CATLIN, Michael, Holland, Michigan 49423 (US)
(74) Representative: Trinks, Ole
(86) International application number: PCT/US2013/068949
(87) International publication number: WO 2014/078170

(56) References cited:
- WO-A2-99/08075
- US-A1- 2010 214 798
- US-A1- 2012 188 779

## Description

### CROSS REFERENCE TO RELATED APPLICATION

This application claims priority from and the benefit of U.S. Provisional Application Serial No. 61/725,815, entitled "ILLUMINATED VEHICLE INTERIOR COMPONENT", filed November 13, 2012.

### BACKGROUND

The invention relates generally to motor vehicles, and more particularly, to an illuminated vehicle interior component.

Vehicles typically include a variety of lighting systems to illuminate various regions of a vehicle interior. For example, certain vehicles include one or more lights configured to illuminate devices in an instrument panel of the vehicle. Furthermore, certain vehicles include one or more lights configured to illuminate devices at other locations throughout the vehicle interior. Such lights may illuminate gauges, touch panels, touch devices, switches, indicators, controls, and so forth. As may be appreciated, lighting systems may provide illumination for enabling a driver to operate the vehicle in low-light conditions. Moreover, lighting systems may provide decorative illumination, which is visible during daytime and/or nighttime operation. These lighting systems may use a light-emitting device positioned to illuminate a component, such as by positioning the light-emitting device behind the component (e.g., for backlighting the component). Accordingly, the light-emitting device may emit light through layers of the component to illuminate the component. Unfortunately, such illuminated vehicle interior components may occupy a substantial amount of space within the instrument panel, for example, and may be expensive to manufacture.

The document WO 99/08075 A2 relates to an indicating device which is provided with at the least one scale or the like for displaying basic information on an index disk. The index disk includes indicators arranged in close connection with and in relation to individual indexes of the scale and arranged as individually controllable light sources for indicating complementary information, which is relatable to the scale.

The document US 2010/214798 A1 relates to a vehicle interior panel having a substrate with a receiving slot. A support lens is disposed in the receiving slot and includes a light source. A sensor is operately connected to the light source and disposed approximate the support lens.

The document US 2012/188779 A1 relates to a vehicle interior assembly that includes a light guide and a light source configured to illuminate the light guide.

### BRIEF DESCRIPTION OF THE INVENTION

The present invention relates to an illuminated vehicle interior component as defined by independent claim 1 as well as to a method for manufacturing an illuminated vehicle interior component as defined by independent claim 13, wherein further developments of the inventive component and the inventive method are provided in the sub-claims respectively.

The illuminated vehicle interior component particularly includes a light-transmissive substrate layer configured to be disposed over a printed circuit layer. The illuminated vehicle interior component also includes a decorative layer formed directly onto the light-transmissive substrate layer. The light-transmissive substrate layer is configured to receive light from a light-emitting device coupled to the printed circuit layer. The light-transmissive substrate layer is also configured to illuminate at least a portion of the illuminated vehicle interior component.

The illuminated vehicle interior component may include a printed circuit layer. The illuminated vehicle interior component also includes a light-emitting device coupled to the printed circuit layer. The illuminated vehicle interior component includes a light-transmissive substrate layer disposed over the printed circuit layer and a decorative layer formed directly onto the light-transmissive substrate layer. The light-transmissive substrate layer is configured to receive light from the light-emitting device. The light-transmissive substrate layer is also configured to illuminate at least the portion of the illuminated vehicle interior component.

The present invention further relates to a method for manufacturing an illuminated vehicle interior component. The method includes forming a light-transmissive substrate layer. The light-transmissive substrate layer is configured to be disposed over a printed circuit layer. The method also includes forming a decorative layer directly onto the light-transmissive substrate layer. The light-transmissive substrate layer is configured to receive light from a light-emitting device coupled to the printed circuit layer. The light-transmissive substrate layer is also configured to illuminate at least a portion of the illuminated vehicle interior component.

### DRAWINGS

FIG. 1 is a perspective view of an exemplary vehicle that may include an illuminated vehicle interior component.
FIG. 2 is a front view of an embodiment of a gauge illuminated by a side-lighting light source.
FIG. 3 is a cross-sectional view of the gauge of FIG. 2.
FIG. 4 is a front view of an embodiment of a gauge illuminated by a back-lighting light source.
FIG. 5 is a cross-sectional view of the gauge of FIG. 4.
FIG. 6 is another detailed cross-sectional view of the gauge of FIG. 4.
FIG. 7 is a front view of an embodiment of another gauge illuminated by a back-lighting light source.
FIG. 8 is a cross-sectional view of the gauge of FIG. 7.
FIG. 9 is a flow chart of an embodiment of a method for manufacturing an illuminated vehicle interior component.

### DETAILED DESCRIPTION

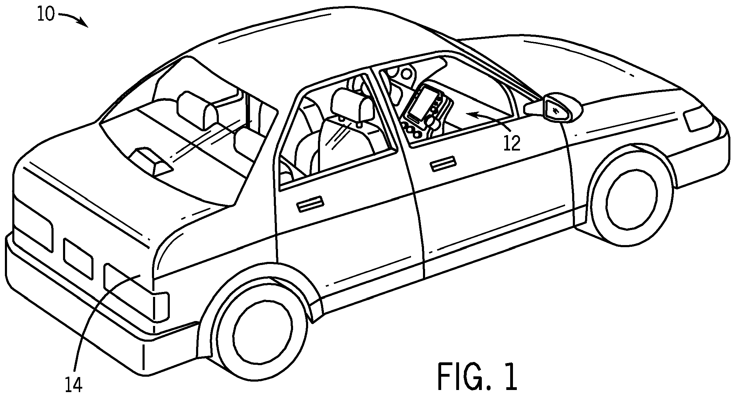

FIG. 1 is a perspective view of an exemplary vehicle 10 that may include an illuminated vehicle interior component, such as an illuminated gauge, gauge cluster, graphics plate, touch panel, touch device, switch, capacitive switch, indicator, control, and so forth. The vehicle 10, in this case a car, includes an interior 12 and an exterior 14. The illuminated vehicle interior component may be located in the interior 12 or on the exterior 14 of the vehicle 10. Furthermore, the illuminated vehicle interior component may be manufactured using a manufacturing technique suitable for production of decorative lighting. For example, the illuminated vehicle interior component may be manufactured using in-mold-decorating (IMD) technology, mold behind technology, or any other suitable manufacturing technology. As such, the illuminated vehicle interior component may be manufactured to have a thickness that is substantially less than traditional illuminated vehicle interior components. Accordingly, the illuminated vehicle interior component may occupy less space than traditional illuminated vehicle interior components. Moreover, the illuminated vehicle interior component may be manufactured with fewer raw materials and thereby be manufactured with less cost than traditional illuminated vehicle interior components.

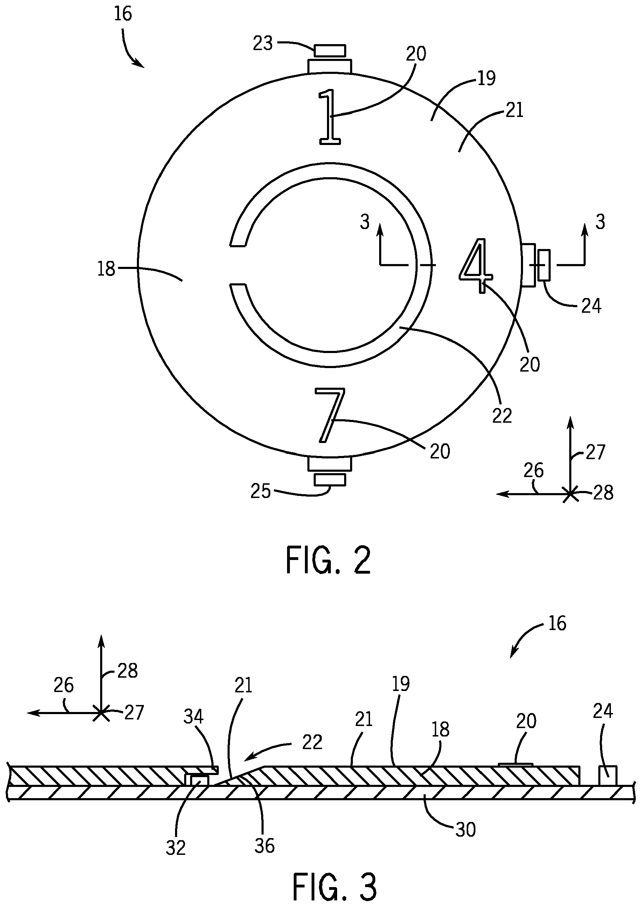

FIG. 2 is a front view of an embodiment of a gauge 16 illuminated by a side-lighting light source. The gauge 16 includes a substrate layer 18 with a decorative layer 19 formed directly thereon. The substrate layer 18 may be manufactured using any suitable material. For example, the substrate layer 18 may be manufactured from an acrylic based material, or another polymeric material. Moreover, in certain embodiments, the substrate layer 18 may be manufactured from any light-transmissive material that facilitates light transmission therethrough (e.g., clear or translucent material). In some embodiments, the transparency of the substrate layer 18 may facilitate only certain light emissions being transmitted therethrough. For example, the substrate layer 18 may enable light emissions to be transmitted through the substrate layer 18 when an angle of incidence of a light ray is less than or equal to a predetermined angle (e.g., 5, 10, 15 degrees, and so forth). Moreover, the substrate layer 18 may block light emissions from being transmitted through the substrate layer 18 when the angle of incidence of the light ray is greater than the predetermined angle.

The decorative layer 19 is formed directly onto the substrate layer 18 using any suitable manufacturing technique. For example, the decorative layer 19 may be formed directly onto the substrate layer 18 using IMD technology, mold behind technology, painting technology, laser etching technology, hot-foil transfer technology, direct printing technology, and so forth. As such, the substrate layer 18 and the decorative layer 19 may be formed together during the molding process, thereby reducing manufacturing time and cost.

The decorative layer 19 includes decorative elements 20 and 21. The decorative elements 20 may be numbers, letters, symbols, shapes, or other features, such as the numbers 1, 4, and 7, as illustrated. In certain embodiments, the decorative elements 20 may be raised above or recessed below the surface of the gauge 16. Moreover, the decorative elements 20 and 21 may be colored (e.g., not light-transmissive, black, white, blue, green, red, etc.) to block light from being transmitted through the decorative layer 19. For example, the decorative elements 20 and 21 may be formed on the substrate layer 19 using a painting material. In some embodiments, at least a portion of the decorative elements 20 and 21 may be formed using a light-transmissive material. For example, the decorative elements 20 and 21 may be formed by applying a colored material that is light-transmissive to certain areas on the surface of the gauge 16, or by not applying a colored material to certain areas on the surface of the gauge 16.

The substrate layer 18 includes an opening 22 that extends through the substrate layer 18 to facilitate light transmission from a light-emitting device (e.g., from a light-emitting device located behind the substrate layer 18) to a surface that illuminates at least a portion of the gauge 16. The gauge 16 also includes light-emitting devices 23, 24, and 25. The light-emitting devices 23, 24, and 25 are side lighting devices configured to emit light rays in directions 26 and 27 that are substantially parallel to the surface of the gauge 16 (e.g., in a radially inward direction). Certain light-emitting devices for lighting the gauge 16 may be configured to emit light rays in a direction 28 that is substantially perpendicular to the surface of the gauge 16. The light-emitting devices 23, 24, and 25 may be any suitable type of light-emitting devices, such as light-emitting diodes (LEDs). In certain embodiments, the light-emitting devices 23, 24, and 25 may be configured to emit a white light, while in other embodiments, the light-emitting devices 23, 24, and 25 may be configured to emit any suitable color of light (e.g., white, blue, red, yellow, green, etc.). As may be appreciated, the light-emitting devices 23, 24, and 25 may be individually controlled based on various conditions, such as a speed of the vehicle 10, a number of rotations per minute of an engine of the vehicle 10, an amount of daylight, a time of day, a temperature, a pressure, a warning indication, an error indication, and so forth.

Using the techniques discussed above, the gauge 16 may be manufactured to have a thickness that is substantially smaller than traditional gauges, thereby occupying less space within an instrument panel. Moreover, by forming the decorative layer 19 and the substrate layer 18 during a single molding process, manufacturing time and cost may be reduced.

FIG. 3 is a cross-sectional view of the gauge 16 of FIG. 2. As illustrated, the substrate layer 18 is disposed over (e.g., directly on) a printed circuit board (PCB) layer 30. The PCB layer 30 is used to provide power to and/or to otherwise control various components mounted to the PCB, such as the light-emitting device 24 and movable parts of the gauge 16 that are electrically coupled to the PCB layer 30. A light-emitting device 32 is also electrically coupled to the PCB layer 30. The light-emitting device 32 is a side lighting device configured to emit light rays in the direction 26 parallel to the surface of the PCB layer 30. The substrate layer 18 includes a protruding edge 34 that covers the light-emitting device 32 such that the light-emitting device 32 is generally not visible when viewing the surface of the gauge 16. Moreover, the substrate layer 18 includes a chamfered edge 36 (e.g., angled edge) that directs light through the opening 22. Specifically, the chamfered edge 36 of the substrate layer 18 is overlaid with the decorative layer 19 to at least partially reflect light rays that are directed toward the chamfered edge 36. For example, the decorative layer 19 on the chamfered edge 36 may be a white coating applied to the surface of the substrate layer 18. Thus, when viewed from the vehicle interior, the opening 22 may appear to be illuminated. In certain embodiments, the light-emitting device 32 may be configured to emit a blue light, while in other embodiments, the light-emitting device 32 may be configured to emit any suitable color of light (e.g., white, blue, red, yellow, green, etc.). The light-emitting device 32 may be any suitable type of light-emitting device, such as an LED. By using side lighting devices and by disposing the substrate layer 18 directly on the PCB layer 30, the gauge 16 may be thinner than gauges that use backlighting or gauges manufactured using other manufacturing techniques.

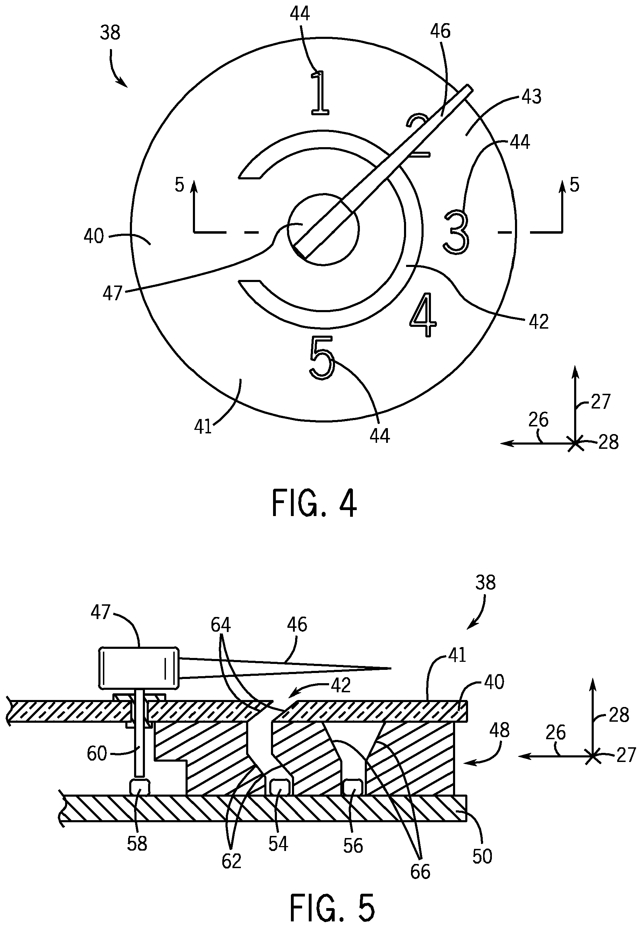

FIG. 4 is a front view of an embodiment of a gauge 38 illuminated by a back-lighting light source. The gauge 38 includes a substrate layer 40 with a decorative layer 41 formed directly thereon. Similar to the substrate layer 18, the substrate layer 40 may be manufactured using any suitable material. For example, the substrate layer 40 may be manufactured from an acrylic based material, or another polymeric material. Moreover, in certain embodiments, the substrate layer 40 may be manufactured from a light-transmissive material that facilitates light transmission therethrough. The substrate layer 40 includes an opening 42 that extends through the substrate layer 40 to facilitate light transmission from a light-emitting device (e.g., from a light-emitting device located behind the substrate layer 40) to the vehicle interior.

The decorative layer 41 is formed directly onto the substrate layer 40 using any suitable manufacturing technique. For example, the decorative layer 41 may be formed directly onto the substrate layer 40 using IMD technology, mold behind technology, painting technology, laser etching technology, hot-foil transfer technology, direct printing technology, and so forth. As such, the substrate layer 40 and the decorative layer 41 may be formed together during the molding process, thereby reducing manufacturing time and cost.

The decorative layer 41 includes decorative elements 43 and 44. The decorative element 43 may be colored to block light transmission through the substrate layer 40. For example, the decorative element 43 may be formed on the substrate layer 40 using a painting material. Moreover, the decorative elements 44 may be portions of the decorative layer 41 where the decorative element 43 is not applied, thereby enabling light to be emitted from the substrate layer 40. The gauge 38 may also include a dial having an arm 46 and a hub 47 each configured to be illuminated.

FIG. 5 is a cross-sectional view of the gauge 38 of FIG. 4. As illustrated, the substrate layer 40 is disposed over (e.g., directly on) a light guide layer 48. Moreover, the light guide layer 48 is disposed over a PCB layer 50. Light-emitting devices 54, 56, and 58 are electrically coupled to the PCB layer 50. The light-emitting devices 54, 56, and 58 are back lighting devices configured to emit light rays in the direction 28 perpendicular to the surface of the PCB layer 50. The light-emitting device 58 is configured to emit light through a shaft 60 to illuminate the hub 47 of the dial. The light guide layer 48 includes a passageway over the light-emitting device 54 having chamfered or angled edges 62 to direct light from the light-emitting device 54 toward the substrate layer 40. Moreover, the substrate layer 40 includes a passageway having chamfered or angled edges 64 to direct light from the light-emitting device 54 through the substrate layer 40, thereby illuminating portions of the gauge 38. The light guide layer 48 also includes a passageway over the light emitting device 56 having chamfered or angled edges 66 to direct light from the light-emitting device 56 toward the substrate layer 40. The substrate layer 40 over the light-emitting device 56 may include openings to enable light rays to pass through the substrate layer 40, and/or a portion of the decorative layer 41 may be absent over the light-emitting device 56, thus enabling light rays to pass through the substrate layer 40. By manufacturing the substrate layer 40 according to the techniques described herein, the substrate layer 40 may include light guiding features, yet have a small thickness. For example, the substrate layer 40 may include chamfered edges 64 to direct light rays through the substrate layer 40.

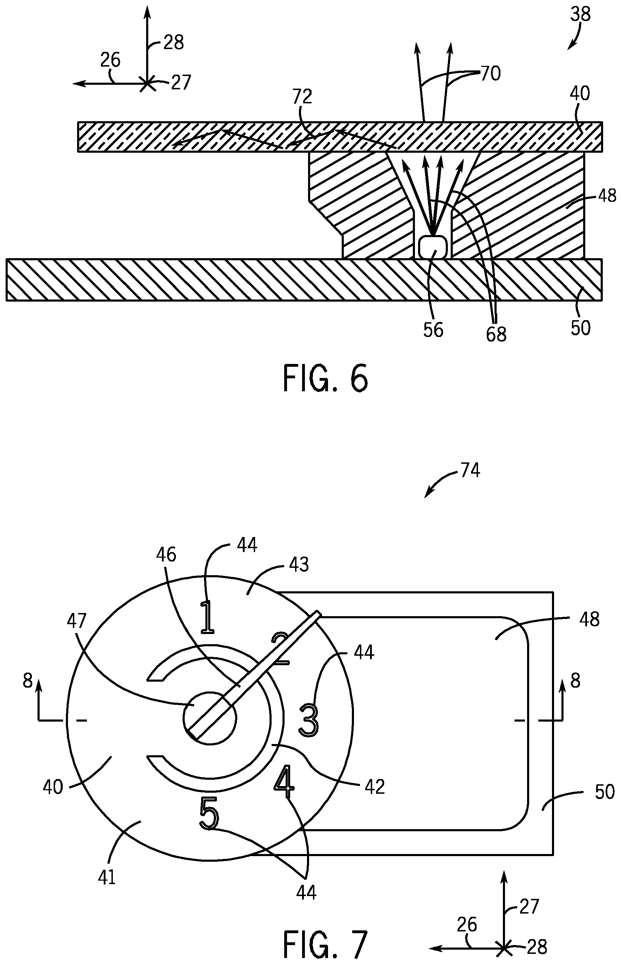

FIG. 6 is another cross-sectional view of the gauge 38 of FIG. 4. As illustrated, the substrate layer 40 may facilitate transmission of only certain light emissions therethrough. The transparency of the substrate layer 40 may be configured to enable certain light rays 68 from the light-emitting device 56 to pass through the substrate layer 40, and to block other light rays 68 from passing through the substrate layer 40. As may be appreciated, light rays 68 from the light-emitting device 56 each contact the substrate layer 40 at an angle of incidence. Accordingly, the substrate layer 40 may enable certain light rays 68 to be transmitted through the substrate layer 40 when an angle of incidence of the light rays is less than or equal to a predetermined angle (e.g., 5, 10, 15 degrees, and so forth). Moreover, the substrate layer 40 may block light emissions from being transmitted through the substrate layer 40 when the angle of incidence of the light rays is greater than the predetermined angle. For example, the substrate layer 40 may enable light rays 70 to be transmitted through the substrate layer 40, and the substrate layer 40 may block light rays 72 from being transmitted through the substrate layer 40. Thus, the substrate layer 40 may be configured to enable and/or block light rays 68 from the light-emitting device 56 based on an angle of incidence of light rays from the light-emitting device 56. Accordingly, the light rays 70 emitted from the substrate layer 40 may be limited to facilitate lighting desired portions of the substrate layer 40.

FIG. 7 is a front view of an embodiment of another gauge 74 illuminated by a back-lighting light source. The gauge 74 is positioned so that part of the gauge 74 covers (e.g., is directly over) the light guide layer 48 and the PCB layer 50, while part of the gauge 74 does not cover (e.g., is not directly over) the light guide layer 48 and the PCB layer 50. With the gauge 74 positioned in this manner, a light-emitting device positioned under the substrate layer 40 of the gauge 74 may be used to illuminate the gauge 74.

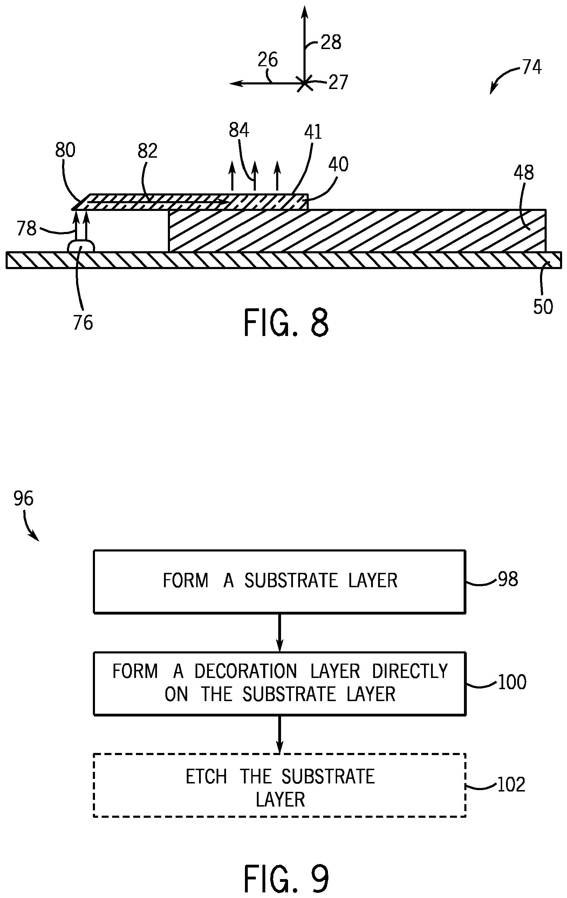

FIG. 8 is a cross-sectional view of the gauge 74 of FIG. 7. As illustrated, a light-emitting device 76 is positioned under the substrate layer 40 and is used to illuminate the gauge 74. Specifically, light rays 78 emitted from the light-emitting device 76 are directed toward a chamfered edge 80 of the substrate layer 40. The upper surface of the chamfered edge 80 may include the decorated layer 41. Further, a back side of the decorated layer 41 may be configured to reflect light rays. Thus, when the light rays 78 contact the chamfered edge 80, the light rays 78 are reflected in the direction 26 through the substrate layer 40, as illustrated by arrow 82. Moreover, additional features of the substrate layer 40 direct light rays out of the substrate layer 40, as illustrated by arrows 84. Accordingly, the substrate layer 40 may be manufactured to direct light rays 78 through the substrate layer 40 and away from the substrate layer 40. As such, an additional light guide layer may be obviated, thereby reducing the thickness of the gauge 74.

FIG. 9 is a flow chart of an embodiment of a method 96 for manufacturing an illuminated vehicle interior component, such as an illuminated gauge, gauge cluster, graphics plate, touch panel, touch device, switch, capacitive switch, indicator, control, and so forth. A light-transmissive substrate layer (e.g., substrate layer 18, 40) is formed (block 98). The light-transmissive substrate layer is configured to be disposed over a PCB layer (e.g., PCB layer 30, 50). Moreover, the light-transmissive substrate layer is configured to receive light from a light-emitting device coupled to the PCB layer and to illuminate at least a portion of the illuminated vehicle interior component. A decorative layer (e.g., decorative layer 19, 41) is formed directly onto the light-transmissive substrate layer (block 100). As discussed above, the decorative layer may be formed directly onto the light-transmissive substrate layer using an IMD technique, a mold behind technique, a painting technique, a laser etching technique, a hot-foil transfer technique, a direct printing technique, or any suitable manufacturing technique. Accordingly, the light-transmissive substrate layer and the decorative layer may be formed together in a single manufacturing operation. In certain embodiments, the light-transmissive substrate layer may be etched to form angles and/or openings in the light-transmissive substrate layer, thereby facilitating light from the light-emitting device to be directed through the light-transmissive substrate layer to illuminate at least a portion of the illuminated vehicle interior component (block 102). Thus, the illuminated vehicle interior component may be manufactured to have a thickness that is substantially less than traditional illuminated vehicle interior components, thereby occupying less space in an instrument panel. Moreover, by forming the decorative layer and the light-transmissive substrate layer during a single molding process, manufacturing time and cost may be reduced.

As may be appreciated, the PCB layers 30 and 50 described herein may be a printed circuit board, a flexible printed circuit, or any other suitable printed circuit layer.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments.

Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. An illuminated vehicle interior component (16, 38, 74) comprising:
- a light-transmissive substrate layer (18, 40) configured to be disposed over a printed circuit layer (30, 50); and
- a decorative layer (19, 41) formed directly onto the light-transmissive substrate layer (18, 40),
**characterized in that**
the light-transmissive substrate layer (18, 40) is configured to receive light from a light-emitting device (23, 24, 25, 32, 54, 56, 58, 76) coupled to the printed circuit layer (30, 50) and to illuminate at least a portion of the illuminated vehicle interior component (16, 38, 74), and
wherein the light-transmissive substrate layer (18, 40) comprises an angled surface (36, 64, 80) configured to direct light from the light-emitting device (23, 24, 25, 32, 54, 56, 58, 76) coupled to the printed circuit layer (30, 50).

2. The illuminated vehicle interior component (16, 38, 74) of Claim 1,
wherein the light-transmissive substrate layer (18, 40) comprises a clear or translucent material.

3. The illuminated vehicle interior component (16, 38, 74) of Claim 1 or 2,
wherein the light-transmissive substrate layer (18, 40) is configured to enable light to pass therethrough if an angle of incidence of a light ray is less than or equal to a threshold angle, and to block light from passing therethrough if the angle of incidence of the light ray is greater than the threshold angle.

4. The illuminated vehicle interior component (16, 38, 74) of one of Claims 1 to 3, wherein the light-transmissive substrate layer (18, 40) is disposed directly onto the printed circuit layer (30, 50).

5. The illuminated vehicle interior component (16, 38, 74) of one of Claims 1 to 4, wherein the light-transmissive substrate layer (18, 40) comprises at least one opening (22, 42) configured to direct light from the light-emitting device (23, 24, 25, 32, 54, 56, 58, 76) coupled to the printed circuit layer (30, 50).

6. The illuminated vehicle interior component (16, 38, 74) of Claim 5,
wherein the at least one opening (22, 42) comprises a chamfered edge (36, 64, 80) configured to direct light.

7. The illuminated vehicle interior component (16, 38, 74) of Claim 6,
wherein a portion of the decorative layer (19, 41) is formed on the chamfered edge (36, 64, 80) and configured to reflect light.

8. The illuminated vehicle interior component (16, 38, 74) of one of Claims 1 to 7, wherein the light-emitting device (23, 24, 25, 32, 54, 56, 58, 76) comprises a light-emitting diode (LED).

9. The illuminated vehicle interior component (16, 38, 74) of one of Claims 1 to 8, comprising a gauge or an indicator formed from the light-transmissive substrate layer (18, 40) and the decorative layer (19, 41).

10. The illuminated vehicle interior component (16, 38, 74) of one of Claims 1 to 9, comprising a capacitive sensor formed from the light-transmissive substrate layer (18, 40) and the decorative layer (19, 41).

11. The illuminated vehicle interior component (16, 38, 74) of one of Claims 1 to 10, comprising a light guide layer (48) disposed between the light-transmissive substrate layer (18, 40) and the printed circuit layer (30, 50), wherein the light guide layer (48) is configured to direct light from the light-emitting device (23, 24, 25, 32, 54, 56, 58, 76) to the light-transmissive substrate layer (18, 40).

12. The illuminated vehicle interior component (16, 38, 74) of one of Claims 1 to 11, wherein the light-emitting device (23, 24, 25, 32, 54, 56, 58, 76) is a side lighting device (23, 24, 25) disposed adjacent to the light-transmissive substrate layer (18, 40) and configured to emit light in a direction parallel to the printed circuit layer (30, 50) and/ or
wherein the light-emitting device (23, 24, 25, 32, 54, 56, 58, 76) is a back lighting device (54, 56, 58) disposed below the light-transmissive substrate layer (18, 40) and configured to emit light in a direction perpendicular to the printed circuit layer (30, 50).

13. A method for manufacturing an illuminated vehicle interior component (16, 38, 74) comprising:
- forming a light-transmissive substrate layer (18, 40), wherein the light-transmissive substrate layer (18, 40) is configured to be disposed over a printed circuit layer (30, 50); and
- forming a decorative layer (19, 41) directly onto the light-transmissive substrate layer (18, 40);
**characterized in that**
the light-transmissive substrate layer (18, 40) is configured to receive light from a light-emitting device (23, 24, 25, 32, 54, 56, 58, 76) coupled to the printed circuit layer (30, 50) and to illuminate at least a portion of the illuminated vehicle interior component (16, 38, 74), and
wherein the decorative layer (19, 41) and the light-transmissive substrate layer (18, 40) are formed together in a single manufacturing operation.

14. The method of Claim 13,
wherein forming the decorative layer (19, 41) directly onto the light-transmissive substrate layer (18, 40) comprises using at least one of an in-mold-decorating (IMD) technique, a mold behind technique, a paint technique, a laser etch technique, a hot-foil transfer technique, and a direct printing technique.

15. The method of Claim 13 or 14, comprising etching the light-transmissive substrate layer (18, 40) to facilitate directing light from the light-emitting device (23, 24, 25, 32, 54, 56, 58, 76) through the light-transmissive substrate layer (18, 40) to illuminate at least the portion of the illuminated vehicle interior component (16, 38, 74).

## Patentansprüche

1. Beleuchtete Fahrzeuginnenausstattungskomponente (16, 38, 74), aufweisend:
- eine lichtdurchlässige Substratschicht (18, 40), die so konfiguriert ist, dass sie über einer gedruckten Schaltungsschicht (30, 50) angeordnet werden kann; und
- eine dekorative Schicht (19, 41), die direkt auf der lichtdurchlässigen Substratschicht (18, 40) ausgebildet ist,
**dadurch gekennzeichnet,**
**dass** die lichtdurchlässige Substratschicht (18, 40) so konfiguriert ist, dass sie Licht von einer lichtemittierenden Vorrichtung (23, 24, 25, 32, 54, 56, 58, 76) empfängt, die mit der gedruckten Schaltungsschicht (30, 50) gekoppelt ist, und mindestens einen Teil der beleuchteten Fahrzeuginnenausstattungskomponente (16, 38, 74) beleuchtet, und
wobei die lichtdurchlässige Substratschicht (18, 40) eine abgewinkelte Oberfläche (36, 64, 80) aufweist, die so konfiguriert ist, dass sie Licht von der lichtemittierenden Vorrichtung (23, 24, 25, 32, 54, 56, 58, 76), die mit der gedruckten Schaltungsschicht (30, 50) gekoppelt ist, lenkt.

2. Beleuchtete Fahrzeuginnenausstattungskomponente (16, 38, 74) nach Anspruch 1, wobei die lichtdurchlässige Substratschicht (18, 40) ein klares oder durchscheinendes Material aufweist.

3. Beleuchtete Fahrzeuginnenausstattungskomponente (16, 38, 74) nach Anspruch 1 oder 2, wobei die lichtdurchlässige Substratschicht (18, 40) so konfiguriert ist, dass sie den Durchtritt von Licht ermöglicht, wenn ein Einfallswinkel eines Lichtstrahls kleiner oder gleich einem Schwellenwinkel ist, und den Durchtritt von Licht blockiert, wenn der Einfallswinkel des Lichtstrahls größer als der Schwellenwinkel ist.

4. Beleuchtete Fahrzeuginnenausstattungskomponente (16, 38, 74) nach einem der Ansprüche 1 bis 3, wobei die lichtdurchlässige Substratschicht (18, 40) direkt auf der gedruckten Schaltungsschicht (30, 50) angeordnet ist.

5. Beleuchtete Fahrzeuginnenausstattungskomponente (16, 38, 74) nach einem der Ansprüche 1 bis 4, wobei die lichtdurchlässige Substratschicht (18, 40) mindestens eine Öffnung (22, 42) aufweist, die so konfiguriert ist, dass sie Licht von der lichtemittierenden Vorrichtung (23, 24, 25, 32, 54, 56, 58, 76), die mit der gedruckten Schaltungsschicht (30, 50) gekoppelt ist, lenkt.

6. Beleuchtete Fahrzeuginnenausstattungskomponente (16, 38, 74) nach Anspruch 5, wobei die mindestens eine Öffnung (22, 42) eine abgeschrägte Kante (36, 64, 80) aufweist, die zum Richten von Licht konfiguriert ist.

7. Beleuchtete Fahrzeuginnenausstattungskomponente (16, 38, 74) nach Anspruch 6, wobei ein Teil der dekorativen Schicht (19, 41) an der abgeschrägten Kante (36, 64, 80) ausgebildet und so konfiguriert ist, dass er Licht reflektiert.

8. Beleuchtete Fahrzeuginnenausstattungskomponente (16, 38, 74) nach einem der Ansprüche 1 bis 7, wobei die lichtemittierende Vorrichtung (23, 24, 25, 32, 54, 56, 58, 76) eine Leuchtdiode (LED) aufweist.

9. Beleuchtete Fahrzeuginnenausstattungskomponente (16, 38, 74) nach einem der Ansprüche 1 bis 8, mit einem Meßgerät oder einem Indikator, das bzw. der aus der lichtdurchlässigen Substratschicht (18, 40) und der Dekorschicht (19, 41) gebildet ist.

10. Beleuchtete Fahrzeuginnenausstattungskomponente (16, 38, 74) nach einem der Ansprüche 1 bis 9, mit einem kapazitiven Sensor, der aus der lichtdurchlässigen Substratschicht (18, 40) und der dekorativen Sschicht (19, 41) gebildet ist.

11. Beleuchtete Fahrzeuginnenausstattungskomponente (16, 38, 74) nach einem der Ansprüche 1 bis 10, mit einer Lichtleiterschicht (48), die zwischen der lichtdurchlässigen Substratschicht (18, 40) und der gedruckten Schaltungsschicht (30, 50) angeordnet ist, wobei die Lichtleiterschicht (48) so konfiguriert ist, dass sie Licht von der lichtemittierenden Vorrichtung (23, 24, 25, 32, 54, 56, 58, 76) zur lichtdurchlässigen Substratschicht (18, 40) lenkt.

12. Beleuchtete Fahrzeuginnenausstattungskomponente (16, 38, 74) nach einem der Ansprüche 1 bis 11, wobei die lichtemittierende Vorrichtung (23, 24, 25, 32, 54, 56, 58, 76) eine seitliche Beleuchtungsvorrichtung (23, 24, 25) ist, die angrenzend an die lichtdurchlässige Substratschicht (18, 40) angeordnet und so konfiguriert ist, dass sie Licht in einer Richtung parallel zur gedruckten Schaltungsschicht (30, 50) emittiert und/oder wobei die lichtemittierende Vorrichtung (23, 24, 25, 32, 54, 56, 58, 76) eine Hintergrundbeleuchtungsvorrichtung (54, 56, 58) ist, die unter der lichtdurchlässigen Substratschicht (18, 40) angeordnet und so konfiguriert ist, dass sie Licht in einer Richtung senkrecht zu der gedruckten Schaltungsschicht (30, 50) emittiert.

13. Verfahren zur Herstellung einer beleuchteten Fahrzeuginnenausstattungskomponente (16, 38, 74), aufweisend:
- Ausbilden einer lichtdurchlässigen Substratschicht (18, 40), wobei die lichtdurchlässige Substratschicht (18, 40) so konfiguriert ist, dass sie über einer gedruckten Schaltungsschicht (30, 50) angeordnet werden kann; und
- Bilden einer dekorativen Schicht (19, 41) direkt auf der lichtdurchlässigen Substratschicht (18, 40);
**dadurch gekennzeichnet,**
**dass** die lichtdurchlässige Substratschicht (18, 40) so konfiguriert ist, dass sie Licht von einer lichtemittierenden Vorrichtung (23, 24, 25, 32, 54, 56, 58, 76) empfängt, die mit der gedruckten Schaltungsschicht (30, 50) gekoppelt ist, und dass sie mindestens einen Teil der beleuchteten Fahrzeuginnenausstattungskomponente (16, 38, 74) beleuchtet, und
wobei die dekorative Schicht (19, 41) und die lichtdurchlässige Substratschicht (18, 40) zusammen in einem einzigen Herstellungsvorgang gebildet werden.

14. Verfahren nach Anspruch 13, wobei das Bilden der dekorativen Schicht (19, 41) direkt auf der lichtdurchlässigen Substratschicht (18, 40) die Verwendung von mindestens einer der folgenden Techniken umfasst: eine In-Mold-Decorating (IMD)-Technik, eine Hinterform (Mould-Behind)-Technik, eine Lackiertechnik, eine Laserätztechnik, eine Heißfolien-Transfertechnik und eine Direktdrucktechnik.

15. Verfahren nach Anspruch 13 oder 14, welches das Ätzen der lichtdurchlässigen Substratschicht (18, 40) aufweist, um das Richten von Licht von der lichtemittierenden Vorrichtung (23, 24, 25, 32, 54, 56, 58, 76) durch die lichtdurchlässige Substratschicht (18, 40) zu erleichtern, um zumindest den Teil der beleuchteten Fahrzeuginnenausstattungskomponente (16, 38, 74) zu beleuchten.

## Revendications

1. Composant intérieur de véhicule illuminé (16, 38, 74) comprenant :
- une couche de substrat transmettrice de lumière (18, 40) configurée pour être disposée au-dessus d'une couche de circuit imprimé (30, 50) ; et
- une couche décorative (19, 41) formée directement sur la couche de substrat transmettrice de lumière (18, 40),
**caractérisé en ce que**
la couche de substrat transmettrice de lumière (18, 40) est configurée pour recevoir de la lumière depuis un dispositif émetteur de lumière (23, 24, 25, 32, 54, 56, 58, 76) couplé à la couche de circuit imprimé (30, 50) et pour illuminer au moins une portion du composant intérieur de véhicule illuminé (16, 38, 74), et
dans lequel la couche de substrat transmettrice de lumière (18, 40) comprend une surface en angle (36, 64, 80) configurée pour diriger la lumière depuis le dispositif émetteur de lumière (23, 24, 25, 32, 54, 56, 58, 76) couplé à la couche de circuit imprimé (30, 50).

2. Composant intérieur de véhicule illuminé (16, 38, 74) selon la revendication 1, dans lequel la couche de substrat transmettrice de lumière (18, 40) comprend un matériau transparent ou translucide.

3. Composant intérieur de véhicule illuminé (16, 38, 74) selon la revendication 1 ou 2, dans lequel la couche de substrat transmettrice de lumière (18, 40) est configurée pour permettre à la lumière de passer à travers elle-même si un angle d'incidence d'un rayon lumineux est inférieur ou égal à un angle seuil, et pour empêcher la lumière de passer à travers elle-même si l'angle d'incidence du rayon lumineux est supérieur à l'angle seuil.

4. Composant intérieur de véhicule illuminé (16, 38, 74) selon l'une des revendications 1 à 3, dans lequel la couche de substrat transmettrice de lumière (18, 40) est disposée directement sur la couche de circuit imprimé (30, 50).

5. Composant intérieur de véhicule illuminé (16, 38, 74) selon l'une des revendications 1 à 4, dans lequel la couche de substrat transmettrice de lumière (18, 40) comprend au moins une ouverture (22, 42) configurée pour diriger la lumière depuis le dispositif émetteur de lumière (23, 24, 25, 32, 54, 56, 58, 76) couplé à la couche de circuit imprimé (30, 50).

6. Composant intérieur de véhicule illuminé (16, 38, 74) selon la revendication 5, dans lequel ladite au moins une ouverture (22, 42) comprend un bord chanfreiné (36, 64, 80) configuré pour diriger la lumière.

7. Composant intérieur de véhicule illuminé (16, 38, 74) selon la revendication 6, dans lequel une portion de la couche décorative (19, 41) est formée sur le bord chanfreiné (36, 64 80) et est configurée pour réfléchir la lumière.

8. Composant intérieur de véhicule illuminé (16, 38, 74) selon l'une des revendications 1 à 7, dans lequel le dispositif émetteur de lumière (23, 24, 25, 32, 54, 56, 58, 76) comprend une diode électroluminescente (LED).

9. Composant intérieur de véhicule illuminé (16, 38, 74) selon l'une des revendications 1 à 8, comprenant une jauge ou un indicateur formé(e) à partir de la couche de substrat transmettrice de lumière (18, 40) et de la couche décorative (19, 41).

10. Composant intérieur de véhicule illuminé (16, 38, 74) selon l'une des revendications 1 à 9, comprenant un capteur capacitif formé à partir de la couche de substrat transmettrice de lumière (18, 40) et de la couche décorative (19, 41).

11. Composant intérieur de véhicule illuminé (16, 38, 74) selon l'une des revendications 1 à 10, comprenant une couche guide de lumière (48) disposée entre la couche de substrat transmettrice de lumière (18, 40) et la couche de circuit imprimé (30, 50),
dans lequel la couche guide de lumière (48) est configurée pour diriger la lumière depuis le dispositif émetteur de lumière (23, 24, 25, 32, 54, 56, 58, 76) jusqu'à la couche de substrat transmettrice de lumière (18, 40).

12. Composant intérieur de véhicule illuminé (16, 38, 74) selon l'une des revendications 1 à 11,
dans lequel le dispositif émetteur de lumière (23, 24, 25, 32, 54, 56, 58, 76) est un dispositif d'éclairage latéral (23, 24, 25) disposé de manière adjacente par rapport à la couche de substrat transmettrice de lumière (18, 40) et configuré pour émettre de la lumière dans une direction parallèle à la couche de circuit imprimé (30, 50), et/ou dans lequel le dispositif émetteur de lumière (23, 24, 25, 32, 54, 56, 58, 76) est un dispositif de rétro-éclairage (54, 56, 58) disposé en dessous de la couche de substrat transmettrice de lumière (18, 40) et configuré pour émettre de la lumière dans une direction perpendiculaire à la couche de circuit imprimé (30, 50).

13. Procédé de fabrication d'un composant intérieur de véhicule illuminé (16, 38, 74) comprenant les étapes consistant à :
- former une couche de substrat transmettrice de lumière (18, 40), dans lequel la couche de substrat transmettrice de lumière (18, 40) est configurée pour être disposée au-dessus d'une couche de circuit imprimé (30, 50) ; et
- former une couche décorative (19, 41) directement sur la couche de substrat transmettrice de lumière (18, 40) ;
**caractérisé en ce que**
la couche de substrat transmettrice de lumière (18, 40) est configurée pour recevoir de la lumière depuis un dispositif émetteur de lumière (23, 24, 25, 32, 54, 56, 58, 76) couplé à la couche de circuit imprimé (30, 50) et pour illuminer au moins une portion du composant intérieur de véhicule illuminé (16, 38, 74), et
dans lequel la couche décorative (19, 41) et la couche de substrat transmettrice de lumière (18, 40) sont formées conjointement dans une opération de fabrication unique.

14. Procédé selon la revendication 13, dans lequel l'étape consistant à former la couche décorative (19, 41) directement sur la couchede substrat transmettrice de lumière (18, 40) comprend l'étape consistant à utiliser au moins une technique parmi une technique de décoration dans le moule (IMD), une technique derrière le moule, une technique de peinture, une technique de gravure laser, une technique de transfert par feuille à chaud, et une technique d'impression directe.

15. Procédé selon la revendication 13 ou 14, comprenant l'étape consistant à graver la couche de substrat transmettrice de lumière (18, 40) pour faciliter la direction de la lumière depuis le dispositif émetteur de lumière (23, 24, 25, 32, 54, 56, 58, 76) à travers la couche de substrat transmettrice de lumière (18, 40) afin d'illuminer au moins la portion du composant intérieur de véhicule illuminé (16, 38, 74).
